(19) Europäisches Patentamt
European Patent Office
Office européen des brevets

(11) **EP 3 485 550 B1**

(12) **EUROPÄISCHE PATENTSCHRIFT**

(45) Veröffentlichungstag und Bekanntmachung des Hinweises auf die Patenterteilung:
**24.08.2022** **Patentblatt 2022/34**

(21) Anmeldenummer: **16760495.8**

(22) Anmeldetag: **05.09.2016**

(51) Internationale Patentklassifikation (IPC):
**H02H 9/02** (2006.01)

(52) Gemeinsame Patentklassifikation (CPC):
**H02H 9/028**

(86) Internationale Anmeldenummer:
**PCT/EP2016/070851**

(87) Internationale Veröffentlichungsnummer:
**WO 2018/041372 (08.03.2018 Gazette 2018/10)**

(54) **STROMBEGRENZUNGSSCHALTUNG**

CURRENT LIMITING CIRCUIT

CIRCUIT DE LIMITATION DE COURANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.05.2019** **Patentblatt 2019/21**

(73) Patentinhaber: **Siemens Energy Global GmbH & Co. KG**
**81739 München (DE)**

(72) Erfinder:
• **BECK, Michael**
**90610 Winkelhaid (DE)**
• **GUGALE, Priyanka**
**91052 Erlangen (DE)**
• **KUHN, German**
**91052 Erlangen (DE)**
• **RINCON CASTEJON, Juan Pablo**
**28760 Tres Cantos, Madrid (ES)**
• **SHARMA, Kunal**
**91052 Erlangen (DE)**

(56) Entgegenhaltungen:
**EP-A1- 2 983 262        WO-A1-2006/010725**
**WO-A1-2016/120880**

• **SUGIMOTO S ET AL: "Principle and Characteristics of a Fault Current Limiter with Series Compensation", IEEE TRANSACTIONS ON POWER DELIVERY, IEEE SERVICE CENTER, NEW YORK, NY, US, Bd. 11, Nr. 2, 1. April 1996 (1996-04-01), Seiten 842-847, XP011049133, ISSN: 0885-8977**

**Beschreibung**

Über Energieversorgungsnetze werden zunehmend größere elektrische Leistungen übertragen. Durch die Einspeisung von immer größeren elektrischen Leistungen in die Netze und durch Verbindungen der Netze untereinander steigt auch die Gefahr, dass bei Fehlern immer größere Fehlerströme auftreten, insbesondere dass bei Kurzschlüssen immer größere Kurzschlussströme auftreten. Das Auftreten von Fehlern in elektrischen Energieversorgungsnetzen ist jedoch unvermeidlich. Zum einen können Schäden in unmittelbarer Nähe der Fehler auftreten, beispielsweise aufgrund von Lichtbögen. Zum anderen verursachen die in den Energieversorgungsnetzen zur Stelle des Fehlers fließenden großen Fehlerströme eine große dynamische und thermische Belastung der Bauelemente des Netzes. Daher ist es wichtig, im Fehlerfall die Größe der auftretenden Ströme zu begrenzen. Zur Strombegrenzung ist es allgemein bekannt, Spulen oder Transformatoren mit hoher Impedanz zu verwenden. Jedoch haben diese Spulen oder Transformatoren auch bei Normalbetrieb des Energieversorgungsnetzes einen nennenswerten Einfluss auf die in dem Netz fließenden Ströme und verschlechtern den Lastfluss durch das Netz.

Aus dem Artikel "Principle and Characteristics of a Fault Current Limiter with Series Compensation" von S. Sugimoto et al, IEEE Transactions on power delivery, IEEE Service center, New York, Bd. 11, Nr. 2, vom 1. April 1996, Seiten 842-847 ist eine Strombegrenzungsschaltung mit Serienkompensation bekannt, die in einem Überbrückungszweig einen Leistungshalbleiterschalter aufweist und mit einem Überspannungsbegrenzer ausgestattet ist.

Aus der internationalen Patentanmeldung WO 2006/010725 A1 ist eine Strombegrenzungsschaltung mit einer Funkenstrecke bekannt. Die internationale Patentanmeldung WO 2016/120880 A1 offenbart eine weitere Strombegrenzungsschaltung mit Serienkompensation. Die europäische Patentanmeldung

EP 2 983 262 A1 offenbart eine Strombegrenzungsschaltung, die als strombegrenzendes Element einen Supraleiter aufweist.

Der Erfindung liegt die Aufgabe zugrunde, eine Strombegrenzungsschaltung und ein Verfahren anzugeben, mit denen sicher und zuverlässig die Größe eines in einem Energieversorgungsnetz auftretenden Stromes begrenzt werden kann.

Diese Aufgabe wird erfindungsgemäß gelöst durch eine Strombegrenzungsschaltung und durch ein Verfahren nach den unabhängigen Patenansprüchen. Vorteilhafte Ausführungsformen der Strombegrenzungsschaltung und des Verfahrens sind in den abhängigen Patentansprüchen angegeben.

Offenbart wird eine Strombegrenzungsschaltung zum Begrenzen der Größe eines Wechselstroms mit

- einer Spuleneinheit und einer Kondensatoreinheit, die elektrisch in Reihe geschaltet sind, und
- einer Überbrückungseinrichtung zum elektrischen Überbrücken der Kondensatoreinheit bei Auftreten eines Überstroms. Dabei kann die Überbrückungseinrichtung elektrisch parallel zur Kondensatoreinheit geschaltet sein. Diese Strombegrenzungsschaltung hat den Vorteil, dass bei geöffneter Überbrückungseinrichtung die Reihenschaltung aus Spuleneinheit und Kondensatoreinheit für den Wechselstrom wirksam ist, währenddessen bei geschlossener Überbrückungseinrichtung nur die Spuleneinheit für den Wechselstrom wirksam ist.

Die Strombegrenzungsschaltung kann so ausgestaltet sein, dass die Kondensatoreinheit eine derartige Kapazität aufweist und die Spuleneinheit eine derartige Induktivität aufweist, dass bei der Nennfrequenz des Wechselstroms der Betrag des kapazitiven Blindwiderstands der Kondensatoreinheit dem Betrag des induktiven Blindwiderstands der Spuleneinheit entspricht. Mit anderen Worten gesagt, kompensiert (bei der Nennfrequenz des Wechselstroms) der kapazitive Blindwiderstand der Kondensatoreinheit den induktiven Blindwiderstand der Spuleneinheit. Dadurch weist die Strombegrenzungsschaltung nach außen hin eine sehr geringe Impedanz auf (im Idealfall die Impedanz Null), weil sich der kapazitive Blindwiderstand und der induktive Blindwiderstand (bei geöffneter Überbrückungseinrichtung) kompensieren. Somit wird der Wechselstrom (bzw. das Fließen des Wechselstroms) bei geöffneter Überbrückungseinrichtung nicht oder nur in einem sehr geringen Maße beeinträchtigt.

Die Strombegrenzungsschaltung ist so ausgestaltet, dass

- die Überbrückungseinrichtung einen ersten Überbrückungszweig zum Überbrücken der Kondensatoreinheit aufweist, wobei der erste Überbrückungszweig ein erstes Überbrückungselement, insbesondere einen Leistungshalbleiterschalter, aufweist.

Der erste Überbrückungszweig kann parallel zur Kondensatoreinheit geschaltet sein. Der Leistungshalbleiterschalter kann (antiparallel geschaltete) ein- und abschaltbare Halbleiterventile, insbesondere Thyristoren, aufweisen. Elektrisch in Reihe zu dem Leistungshalbleiterschalter kann eine erste Dämpfungsschaltung (insbesondere eine weitere Spuleneinheit) geschaltet sein. Diese erste Dämpfungsschaltung begrenzt den Stromfluss durch den Leistungshalbleiterschalter. Die erste Dämpfungsschaltung ist in dem ersten Überbrückungszweig angeordnet. Mittels des ersten Überbrückungselements kann die Kondensatoreinheit bei Auftreten eines Überstroms kurzgeschlossen werden. Es ist besonders vorteilhaft, das erste Überbrückungselement als einen Leistungshalbleiterschalter auszugestalten, weil mit einem Leistungshalbleiterschalter die Kondensatoreinheit besonders schnell überbrückt werden kann. Ein Leistungshalbleiterschalter kann sehr eingeschaltet (das heißt geschlossen) werden, beispielsweise können Einschaltzeiten erreicht werden, die kleiner als eine Millisekunde sind.

Die Strombegrenzungsschaltung ist so ausgestaltet, dass

- die Überbrückungseinrichtung einen zweiten Überbrückungszweig zum Überbrücken der Kondensatoreinheit aufweist, wobei der zweite Überbrückungszweig elektrisch parallel zu dem ersten Überbrückungszweig geschaltet ist und der zweite Überbrückungszweig ein zweites Überbrückungselement, insbesondere eine Funkenstrecke, aufweist.

Der zweite Überbrückungszweig kann eine elektrisch in Reihe zu der Funkenstrecke angeordnete (zweite) Dämpfungsschaltung aufweisen. Die (zweite) Dämpfungsschaltung dient zum Begrenzen des beim Zünden der Funkenstrecke durch die Funkenstrecke fließenden Entladestroms der Kondensatoreinheit. Mittels des zweiten Überbrückungszweigs kann die Kondensatoreinheit überbrückt werden, falls der erste Überbrückungszweig aufgrund eines Fehlers ausfallen sollte. Es ist besonders vorteilhaft, als zweites Überbrückungselement eine Funkenstrecke einzusetzen, weil eine Funkenstrecke die Kondensatoreinheit (im Vergleich zu einem mechanischen Überbrückungsschalter) schnell überbrücken kann und außerdem kurzzeitig hoch belastbar ist.

Die Strombegrenzungsschaltung ist so ausgestaltet, dass

- die Überbrückungseinrichtung einen dritten Überbrückungszweig zum Überbrücken des zweiten Überbrückungselements aufweist, wobei der dritte Überbrückungszweig elektrisch parallel zu dem zweiten Überbrückungselement geschaltet ist und der dritte Überbrückungszweig ein drittes Überbrückungselement, insbesondere einen mechanischen Überbrückungsschalter, aufweist.

Mittels des dritten Überbrückungszweigs kann vorteilhafterweise eine Überbrückung der Kondensatoreinheit (Überbrückungszweig der Kondensatoreinheit) realisiert werden, welche den fließenden Strom auch über eine längere Zeitdauer führen kann. Dabei ist das dritte Überbrückungselement vorteilhafterweise so ausgestaltet, dass dieses im eingeschalteten Zustand (geschlossenen Zustand) einen sehr geringen ohmschen Widerstand aufweist. Vorteilhafterweise kann als ein derartiges drittes Überbrückungselement ein mechanischer Überbrückungsschalter (mechanischer Bypassschalter) eingesetzt werden, da mittels eines mechanischen Überbrückungsschalters sehr geringe ohmsche Widerstände erreicht werden können, insbesondere geringere Widerstände als sie mit einem Leistungshalbleiterschalter oder mit einer Funkenstrecke erreichbar sind.

Die Strombegrenzungsschaltung kann auch so ausgestaltet sein, dass

- die Kondensatoreinheit mit einem Überspannungsbegrenzer, insbesondere mit einem Varistor, versehen ist. Dadurch kann die Kondensatoreinheit zuverlässig vor Überspannungen geschützt werden, was insbesondere die Lebensdauer der Strombegrenzungsschaltung vergrößert.

Die Strombegrenzungsschaltung kann auch so ausgestaltet sein, dass

- die Spuleneinheit zwei parallel geschaltete elektrische Spulen aufweist. Mittels zweier derartiger parallel geschalteter elektrischer Spulen kann vorteilhafterweise erkannt werden, wenn eine der beiden Spulen einen Fehler (beispielsweise einen Windungsschluss) aufweist, weil sich dann das Verhältnis der durch die beiden Spulen fließenden elektrischen Ströme verändert.

Die Strombegrenzungsschaltung weist eine Steuereinheit auf,

- welche so ausgestaltet ist, dass die Steuereinheit ein erstes Überbrückungssignal erzeugt, wenn der durch die Spuleneinheit fließende elektrische Strom einen ersten Schwellwert überschreitet, wobei das erste Überbrückungssignal dazu bestimmt ist, ein Schließen des ersten Überbrückungselements (insbesondere ein Schließen des Leistungshalbleiterschalters) zu veranlassen. Mittels einer derartigen Steuereinheit wird bei Auftreten eines Überstroms (also bei Auftreten eines Stroms, der den ersten Schwellwert überschreitet) das erste Überbrückungssignal erzeugt und damit ein Kommando zum Schließen des ersten Überbrückungselementes abgegeben.

Die Steuereinheit kann so ausgestaltet sein, dass

- die Steuereinheit das erste Überbrückungssignal (zusätzlich) auch dann erzeugt, wenn der durch den Überspannungsbegrenzer fließende elektrische Strom einen zweiten Schwellwert überschreitet. Bei dieser Ausgestaltung wird das erste Überbrückungssignal also dann erzeugt, wenn der durch die Spuleneinheit fließende elektrische Strom einen ersten Schwellwert überschreitet oder wenn der durch den Überspannungsbegrenzer fließende elektrische Strom den zweiten Schwellwert überschreitet. Der durch den Überspannungsbegrenzer fließende elektrische Strom überschreitet dann den zweiten Schwellwert, wenn an der Kondensatoreinheit eine Überspannung auftritt und somit der Überspannungsbegrenzer der Kondensatoreinheit aktiv wird.

Damit wird vorteilhafterweise sichergestellt, dass die Überbrückungseinrichtung auch dann schließt, wenn beispielsweise ein Fehler bei der Messung des durch die Spuleneinheit fließenden elektrischen Stroms auftritt und deshalb ein Überschreiten des ersten Schwellwertes nicht erkannt wird.

Die Steuereinheit ist so ausgestaltet, dass

- die Steuereinheit ein zweites Überbrückungssignal erzeugt, wobei das zweite Überbrückungssignal dazu bestimmt ist, ein Schließen des zweiten Überbrückungselements zu veranlassen (, insbesondere ein Zünden der Funkenstrecke zu veranlassen), wenn auf das erste Überbrückungssignal hin das erste Überbrückungselement (zum Beispiel aufgrund eines Fehlers) nicht schließt. Durch diese Ausgestaltung der Steuereinheit wird die Zuverlässigkeit der Strombegrenzungsschaltung noch einmal deutlich erhöht. Auch wenn das erste Überbrückungselement auf das erste Überbrückungssignal hin nicht schließt (weil beispielsweise ein Fehler in der Strombegrenzungsschaltung auftritt), wird von der Steuereinheit das zweite Überbrückungssignal erzeugt und damit das zweite Überbrückungselement angewiesen, die Kondensatoreinheit zu überbrücken. Somit kann auch in diesem Fall mit der Strombegrenzungsschaltung die Größe des Wechselstroms zuverlässig begrenzt werden.

Die Strombegrenzungsschaltung kann eine erste Strommesseinrichtung zum Messen des durch die Spuleneinheit fließenden elektrischen Stroms aufweisen. Die Strombegrenzungsschaltung kann eine zweite Strommesseinrichtung zum Messen des durch den Überspannungsbegrenzer fließenden elektrischen Stroms aufweisen. Die Strombegrenzungsschaltung kann eine dritte Strommesseinrichtung zum Messen des durch eine der beiden Spulen der Spuleneinheit fließenden elektrischen Stroms aufweisen.

Offenbart wird weiterhin ein Verfahren zum Begrenzen der Größe eines (durch einen Netzanschlusspunkt eines Energieversorgungsnetzes fließenden) Wechselstroms, bei dem

- der Wechselstrom durch eine elektrische Reihenschaltung aus einer Spuleneinheit und einer Kondensatoreinheit geleitet wird, und
- zum Begrenzen der Größe des Wechselstroms die Kondensatoreinheit elektrisch überbrückt wird, wodurch der induktive Blindwiderstand der Reihenschaltung vergrößert wird (und durch die Vergrößerung des induktiven Blindwiderstands die Größe des Wechselstroms begrenzt wird).

Bei der Nennfrequenz des Wechselstroms kompensiert der kapazitive Blindwiderstand der Kondensatoreinheit den induktiven Blindwiderstand der Spuleneinheit. Mit anderen Worten gesagt, sind die Kapazität der Kondensatoreinheit und die Induktivität der Spuleneinheit so gewählt, dass bei der Nennfrequenz des Wechselstroms der Betrag des kapazitiven Blindwiderstands der Kondensatoreinheit dem Betrag des induktiven Blindwiderstands der Spuleneinheit entspricht.

Dieses Verfahren ist so ausgestaltet, dass

- (bei Auftreten eines Überstroms) die Kondensatoreinheit elektrisch überbrückt wird mittels eines ersten Überbrückungszweigs, der ein erstes Überbrückungselement, insbesondere einen Leistungshalbleiterschalter, aufweist. Der erste Überbrückungszweig kann elektrisch parallel zu der Kondensatoreinheit geschaltet sein. Der durch die Spuleneinheit fließende elektrische Strom wird gemessen. Das Auftreten eines Überstroms wird erkannt, wenn der durch die Spuleneinheit fließende elektrische Strom einen ersten Schwellwert überschreitet oder wenn der durch einen Überspannungsbegrenzer (der Kondensatoreinheit) fließende elektrische Strom einen zweiten Schwellwert überschreitet.

Das Verfahren läuft so ab, dass

- die Kondensatoreinheit mittels eines zweiten Überbrückungszweigs elektrisch überbrückt wird, wenn beim Überbrücken der Kondensatoreinheit mittels des ersten Überbrückungszweigs ein Fehler auftritt, wobei der zweite Überbrückungszweig ein zweites Überbrückungselement, insbesondere eine Funkenstrecke, aufweist.

Der zweite Überbrückungszweig kann elektrisch parallel zu der Kondensatoreinheit geschaltet sein.
Das Verfahren läuft so ab, dass

- zusätzlich zum Überbrücken der Kondensatoreinheit mittels des ersten Überbrückungszweigs oder mittels des zweiten Überbrückungszweigs das zweite Überbrückungselement elektrisch überbrückt wird mittels eines dritten Überbrückungszweigs, der elektrisch parallel zu dem zweiten Überbrückungselement geschaltet ist und ein drittes Überbrückungselement, insbesondere einen mechanischen Überbrückungsschalter, aufweist.

Das Verfahren kann so ablaufen, dass

- die Spuleneinheit zwei parallel geschaltete elektrische Spulen aufweist,
- der durch die Spulen fließende Strom überwacht wird, und
- ein Alarmsignal erzeugt wird, sobald sich das Verhältnis der durch die beiden Spulen fließenden Ströme um mehr als einen (dritten) Schwellwert (Spulenstrom-Schwellwert) verändert.

Die vorstehend angegebenen Verfahren weisen dieselben Vorteile auf, die oben im Zusammenhang mit der Strombegrenzungsschaltung angegeben sind.

Im Folgenden wird die Erfindung anhand von Ausführungsbeispielen näher erläutert. Gleiche Bezugszeichen verweisen dabei auf gleiche oder gleich wirkende Elemente. Dazu ist in

Figur 1    ein Ausführungsbeispiel der Strombegrenzungsschaltung, in

Figur 2    ein detaillierteres Ausführungsbeispiel der Strombegrenzungsschaltung, in

Figur 3    ein Ausführungsbeispiel der Spuleneinheit und in

Figur 4    ein beispielhafter Verfahrensablauf

dargestellt.

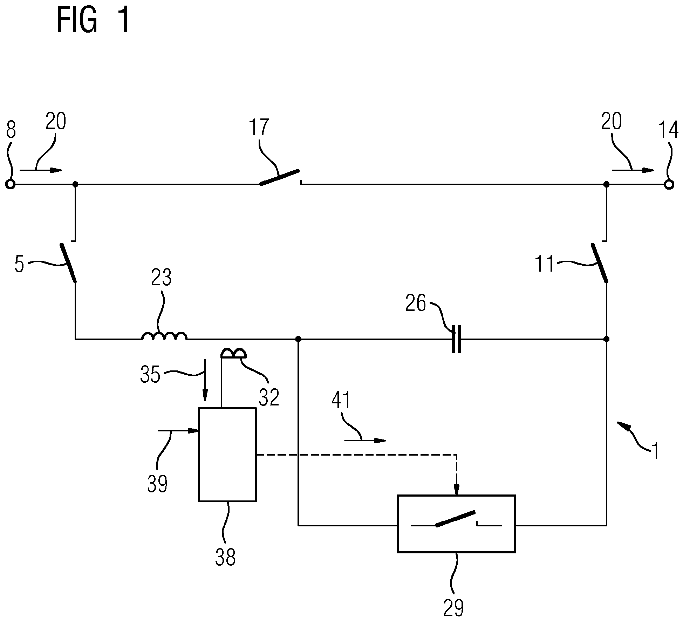

Die Ausführungsbeispiele sind zwar in den Figuren 1 bis 3 einphasig dargestellt, sie können aber in der Praxis auch mehrphasig, insbesondere dreiphasig, ausgestaltet sein.

In Figur 1 ist ein Ausführungsbeispiel einer Strombegrenzungsschaltung 1 dargestellt. Die Strombegrenzungsschaltung 1 ist mittels eines ersten Trennschalters 5 mit einem ersten Netzanschlusspunkt 8 und mittels eines zweiten Trennschalters 11 mit einem zweiten Netzanschlusspunkt 14 elektrisch verbunden. Der erste Netzanschlusspunkt 8 und der zweite Netzanschlusspunkt 14 sind mit einem (nicht dargestellten) Energieversorgungsnetz verbunden. Der erste Netzanschlusspunkt 8 ist mittels eines dritten Trennschalters 17 (Bypasstrenner 17, Überbrückungstrenner 17) mit dem zweiten Netzanschlusspunkt 14 elektrisch verbindbar. Wenn der Überbrückungstrenner 17 geschlossen ist, dann fließt ein Wechselstrom 20 unmittelbar von dem ersten Netzanschlusspunkt 8 über den

Überbrückungstrenner 17 (Überbrückung 17) zu dem zweiten Netzanschlusspunkt 14. In diesem Fall fließt der Wechselstrom 20 nicht über die Strombegrenzungsschaltung. Wenn jedoch der Überbrückungstrenner 17 geöffnet ist und der erste Trennschalter 5 sowie der zweite Trennschalter 11 geschlossen sind, dann fließt der Wechselstrom 20 von dem ersten Netzanschlusspunkt 8 über die Strombegrenzungsschaltung 1 zu dem zweiten Netzanschlusspunkt 14. Dann ist die Strombegrenzungsschaltung 1 wirksam.

In diesem Fall fließt der Wechselstrom 20 von dem ersten Netzanschlusspunkt 8 über den ersten Trennschalter 5, eine Spuleneinheit 23, eine Kondensatoreinheit 26 und den zweiten Trennschalter 11 zu dem zweiten Netzanschlusspunkt 14. Die elektrische Induktivität der Spuleneinheit 23 und die elektrische Kapazität der Kondensatoreinheit 26 sind so gewählt, dass bei der Nennfrequenz f des Wechselstroms der Betrag des kapazitiven Blindwiderstands $X_C$ der Kondensatoreinheit 26 dem Betrag des induktiven Blindwiderstands $X_L$ der Spuleneinheit 23 entspricht. Bei der Nennfrequenz f des Wechselstroms kompensiert also der kapazitive Blindwiderstand $X_C$ der Kondensatoreinheit 26 den induktiven Blindwiderstand $X_L$ der Spuleneinheit 23. Es gilt also für die Induktivität L der Spuleneinheit 23 und die Kapazität C der

Kondensatoreinheit 26:

$$|X_L| = \omega L = \frac{1}{\omega C} = |X_C|$$

mit der Kreisfrequenz $\omega = 2\pi f$, wobei f die Nennfrequenz f des Wechselstroms ist. Bei der Nennfrequenz f des Wechselstroms kompensiert also (bei geöffneter Überbrückungseinrichtung 29) die Kapazität der Kondensatoreinheit 26 die Induktivität der Spuleneinheit 23, so dass der induktive Blindwiderstand der Spuleneinheit keinen Einfluss auf den Wechselstrom 20 hat. Für den Wechselstrom 20 besitzt die Reihenschaltung aus Spuleneinheit und Kondensatoreinheit dann im Idealfall die Impedanz Null, in der Praxis kann die Reihenschaltung eine geringe Impedanz aufweisen aufgrund einer möglicherweise nicht immer ideal erfolgenden Kompensation des induktiven Blindwiderstands durch den kapazitiven Blindwiderstand. Dies hat zur Folge, dass der Fluss des Wechselstroms 20 von dem ersten Netzanschlusspunkt 8 zu dem zweiten Netzanschlusspunkt 14 durch die Reihenschaltung aus Spuleneinheit 23 und Kondensatoreinheit 26 nicht oder nur sehr gering beeinträchtigt wird. Dann hat die Strombegrenzungsschaltung 1 keinen oder nur einen sehr geringen unerwünschten Einfluss auf die Energieübertragung.

Mit anderen Worten gesagt, sind die Spuleneinheit 23 und die Kondensatoreinheit 26 auf die elektrische Frequenz/Nennfrequenz des Wechselstroms (d. h. auf die Nennfrequenz des zu schützenden Energieversorgungsnetzes) abgestimmt. Daher ist die Impedanz der Reihenschaltung aus Spuleneinheit 23 und Kondensatoreinheit 26 bei Nennfrequenz des Wechselstroms idealerweise Null. Deshalb wird der Leistungsfluss durch die Strombegrenzungsschaltung im Normalfall nicht beeinträchtigt.

Die Kondensatoreinheit 26 ist mittels einer Überbrückungseinrichtung 29 elektrisch überbrückbar, die Überbrückungseinrichtung 29 ist im Ausführungsbeispiel der Figur 1 symbolisch als ein Schalter dargestellt, welcher in seinem geschlossenen Zustand die Kondensatoreinheit 26 elektrisch überbrückt. Die Überbrückungseinrichtung 29 ist parallel zu der Kondensatoreinheit 26 geschaltet. Die Überbrückungseinrichtung 29 dient zum elektrischen Überbrücken der Kondensatoreinheit 26 bei Auftreten eines Überstroms.

Der durch die Spuleneinheit 23 fließende Wechselstrom wird mittels eines ersten Stromsensors 32 (erste Strommesseinrichtung 32) gemessen. Der erste Stromsensor 32 dient also zum Messen des durch die Spuleneinheit 23 fließenden elektrischen Stroms. Der erste Stromsensor 32 kann beispielsweise als ein Messwandler ausgestaltet sein. Von dem ersten Stromsensor 32 gelangt ein erstes Strommesssignal 35 zu einer Steuereinheit 38 der Strombegrenzungsschaltung 1. Sobald die Steuereinheit 38 erkennt, dass der durch die Spuleneinheit 23 fließende Strom zu groß wird (das heißt, das der durch die Spuleneinheit 23 fließende Strom 20 einen ersten Schwellwert 39 überschreitet), dann sendet die Steuereinheit 38 ein Überbrückungssignal 41 an die Überbrückungseinrichtung 29. Daraufhin überbrückt die Überbrückungseinrichtung 29 die Kondensatoreinheit 26. Der Wechselstrom 20 fließt dann nicht mehr durch die Kondensatoreinheit 26, sondern durch die Überbrückungseinrichtung 29. Dadurch wird der kapazitive Blindwiderstand $X_C$ des Kondensators 26 kurzgeschlossen, so dass nur noch der induktive Blindwiderstand $X_L$ der Spuleneinheit 23 für den Wechselstrom 20 wirksam ist. Dieser induktive Blindwiderstand $X_L$ begrenzt den Wechselstrom 20, so dass die Strombegrenzungsschaltung 1 nun ihre Strombegrenzungsfunktion ausführt.

Wenn der durch die Spuleneinheit 23 fließende Wechselstrom 20 wieder seinen Normalwert annimmt (beispielsweise weil ein Kurzschluss im Energieversorgungsnetz beseitigt ist), dann erkennt die Steuereinheit 38 anhand des ersten Strommesssignals 35 das Vorliegen von normalen Stromverhältnissen (das heißt, das der durch die Spuleneinheit 23 fließende Strom 20 den ersten Schwellwert 39 unterschreitet). Die Steuereinheit 38 beendet dann das Senden des Überbrückungssignals 41 an die Überbrückungseinrichtung 29. Daraufhin öffnet die Überbrückungseinrichtung 29 (d.h. die Überbrückungseinrichtung 29 geht von dem geschlossenen Zustand in den offenen Zustand über) und der durch die Überbrückungseinrichtung 29 fließende Wechselstrom 20 kommutiert zurück in die Kondensatoreinheit 26. Daraufhin ist die Kondensatoreinheit 26 wieder für den Wechselstrom 20 wirksam, der kapazitive Blindwiderstand Xc der Kondensatoreinheit kompensiert wieder den induktiven Blindwiderstand $X_L$ der Spuleneinheit und der Wechselstrom 20 kann ungehindert (bzw. nahezu ungehindert) durch die Strombegrenzungsschaltung 1 fließen.

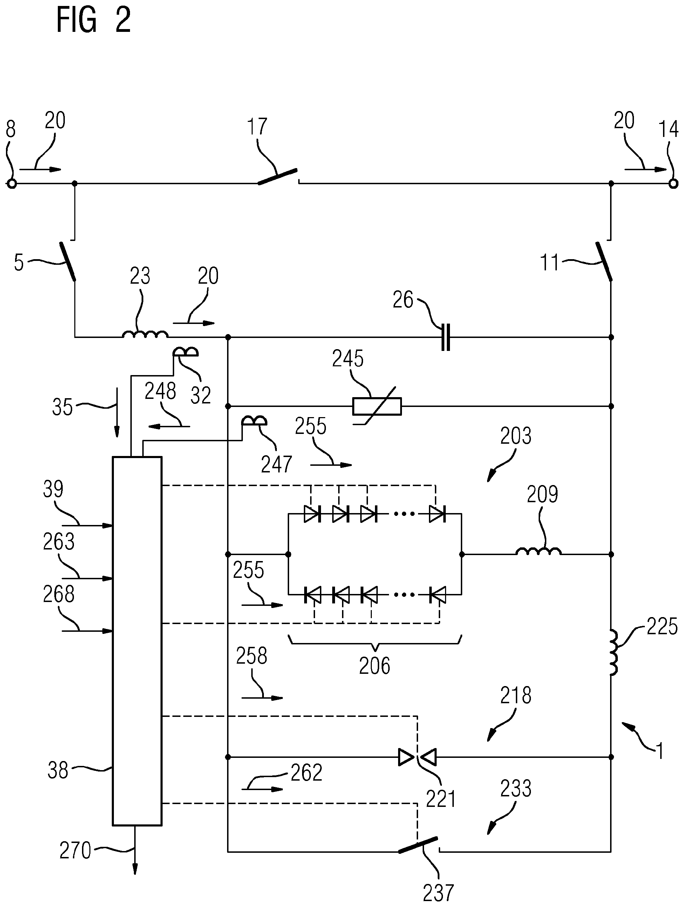

In Figur 2 ist in detaillierter Form der Aufbau der Überbrückungseinrichtung 29 dargestellt. Die Überbrückungseinrichtung 29 weist einen ersten Überbrückungszweig 203 zum Überbrücken der Kondensatoreinheit 26 auf. Der erste Überbrückungszweig 203 weist ein erstes Überbrückungselement 206 auf. Bei dem ersten Überbrückungselement 206 kann es sich beispielsweise um einen (bidirektionalen) Leistungshalbleiterschalter 206 handeln. Dieser Leistungshalbleiterschalter 206 kann (antiparallel geschaltete) ein- und abschaltbare Halbleiterventile, insbesondere (antiparallel geschaltete) Thyristoren, aufweisen. Der Leistungshalbleiterschalter 206, insbesondere die Thyristoren, können schnell geschaltet werden. Elektrisch in Reihe zu dem ersten Überbrückungselement 206 ist eine erste Dämpfungsschaltung 209 geschaltet. Die erste Dämpfungsschaltung 209 kann beispielsweise als eine weitere Spuleneinheit 209 ausgestaltet sein. Die erste Dämpfungsschaltung 209 begrenzt beim Einschalten des ersten Überbrückungselements 206 den durch das erste Überbrückungselement 206 fließenden elektrischen Strom. Der Leistungshalbleiterschalter 206 und die erste Dämpfungsschaltung 209 sind Elemente des ersten Überbrückungszweigs 203. Der erste Überbrückungszweig 203 ist parallel zu der Kondensatoreinheit 26 geschaltet. Wenn das erste Überbrückungselement 206 eingeschaltet ist, dann überbrückt der erste Überbrückungszweig 203 die Kondensatoreinheit 26 und der Wechselstrom 20 kommutiert von der Kondensatoreinheit 26 in den ersten Überbrückungszweig 203.

Die Überbrückungseinrichtung 29 weist einen zweiten Überbrückungszweig 218 auf, der ebenfalls zum Überbrücken der Kondensatoreinheit 26 dient. Der zweite Überbrückungszweig 218 ist elektrisch parallel zu dem ersten Überbrückungszweig 203 geschaltet. Der zweite Überbrückungszweig 218 weist ein zweites Überbrückungselement 221 auf. Bei dem zweiten Überbrückungselement 221 kann es sich beispielsweise um eine Funkenstrecke 221 handeln. Weiterhin weist der zweite Überbrückungszweig 218 eine zweite Dämpfungsschaltung 225 auf, bei dieser zweiten Dämpfungsschaltung 225 kann es sich beispielsweise um eine zusätzliche Spuleneinheit 225 handeln. Die zweite Dämpfungsschaltung 225 ist elektrisch in Reihe zu dem zweiten Überbrückungselement 221 angeordnet. Die zweite Dämpfungsschaltung 225 dient zum Begrenzen des beim Einschalten des zweiten Überbrückungselements 221 (Zünden der Funkenstrecke 221) durch das zweite Überbrückungselement 221 fließenden Stroms.

Die Überbrückungseinrichtung 29 weist einen dritten Überbrückungszweig 233 zum Überbrücken des zweiten Überbrückungselements 221 auf. Der dritte Überbrückungszweig 233 ist elektrisch parallel zu dem zweiten Überbrückungselement 221 geschaltet. Der dritte Überbrückungszweig 233 weist ein drittes Überbrückungselement 237 auf. Das dritte Überbrückungselement 237 kann beispielsweise ein mechanischer Überbrückungsschalter 237 (Bypass-Switch 237) sein.

Die Kondensatoreinheit 26 ist mit einem Überspannungsbegrenzer 245 versehen. Bei diesem Überspannungsbegrenzer 245 kann es sich beispielsweise um einen Varistor 245 handeln. Der Überspannungsbegrenzer 245 ist parallel zu der Kondensatoreinheit 26 geschaltet und bildet ein Teil der Überbrückungseinrichtung 29. Sobald an der Kondensatoreinheit 26 eine Überspannung auftritt, wird der Überspannungsbegrenzer 245 leitend, so dass der Strom von der Kondensatoreinheit 26 in den Überspannungsbegrenzer 245 kommutiert. Dadurch wird die Kondensatoreinheit 26 vor der Überspannung geschützt.

Neben dem bereits im Zusammenhang mit Figur 1 genannten ersten Stromsensor 32 weist die Überbrückungseinrichtung 29 einen zweiten Stromsensor 247 (zweite Strommesseinrichtung 247) zum Messen des durch den Überspannungsbegrenzer 245 fließenden elektrischen Stroms auf. Der zweite Stromsensor 247 sendet ein zweites Strommesssignal 248 an die Steuereinheit 31.

Die Steuereinheit 38 kann ein erstes Überbrückungssignal 255 an das erste Überbrückungselement 206 absenden. Auf das erste Überbrückungssignal 255 hin schließt das erste Überbrückungselement 206, das heißt, das erste Überbrückungselement 206 überbrückt die Kondensatoreinheit 26. Beispielsweise werden beim ersten Überbrückungssignal 255 Zündimpulse zu den Thyristoren des Leistungshalbleiterschalters 206 geleitet, so dass die Thyristoren zünden und der Leistungshalbleiterschalter 206 geschlossen wird. Weiterhin kann die Steuereinheit 38 ein zweites Überbrückungssignal 258 an das zweite Überbrückungselement 221 absenden. Auf das zweite Überbrückungssignal 258 hin schließt das zweite Überbrückungselement 221, das heißt, dass das zweite Überbrückungselement 221 überbrückt die Kondensatoreinheit 26. Weiterhin kann die Steuereinheit 38 ein drittes Überbrückungssignal 262 an das dritte Überbrückungselement 237 absenden. Auf das dritte Überbrückungssignal 262 hin überbrückt das dritte Überbrückungselement 237 das zweite Überbrückungselement 221.

Die Steuereinheit 38 erzeugt das erste Überbrückungssignal 255 dann, wenn der durch die Spuleneinheit 23 fließende elektrische Strom den ersten Schwellwert 39 überschreitet oder wenn der durch den Überspannungsbegrenzer 245 fließende elektrische Strom einen zweiten Schwellwert 263 überschreitet. Dabei wird der durch die Spuleneinheit fließende Strom mittels des ersten Stromsensors 32 und der durch den Überspannungsbegrenzer 245 fließende Strom mittels des zweiten Stromsensors 247 gemessen. Das erste Überbrückungssignal 255 ist dazu bestimmt, ein Schließen des ersten Überbrückungselements 206 zu veranlassen. Die Kondensatoreinheit 26 wird also auch dann elektrisch überbrückt, sobald an der Kondensatoreinheit eine Überspannung auftritt. Wenn jedoch auf das erste Überbrückungssignal 255 hin das erste Überbrückungselement 206 nicht schließt (weil beispielsweise das erste Überbrückungselement 206 defekt ist oder die Signalübertragung zwischen der Steuereinheit 38 und dem ersten Überbrückungselement 206 gestört ist), dann erzeugt die Steuereinheit 38 das zweite Überbrückungssignal 258 und sendet dieses an das zweite Überbrückungselement 221. Das zweite Überbrückungssignal 258 ist dazu bestimmt, ein Schließen des zweiten Überbrückungselements 221 zu veranlassen. Dadurch wird mittels der Strombegrenzungsschaltung 1 der Strom auch dann wirksam begrenzt, wenn bei dem ersten Überbrückungselement 206 ein Fehler auftreten sollte.

Weiterhin sendet die Steuereinheit 38 gemeinsam mit dem ersten Überbrückungssignal 255 und gemeinsam mit dem zweiten Überbrückungssignal 258 (oder geringfügig zeitverzögert nach dem ersten Überbrückungssignal 255 oder dem zweiten Überbrückungssignal 258) das dritte Überbrückungssignal 262 an das dritte Überbrückungselement 237. Auf das dritte Überbrückungssignal 262 hin schließt das dritte Überbrückungselement 237 und überbrückt damit das zweite Überbrückungselement 221. Daraufhin kommutiert der zuvor durch das erste Überbrückungselement 206 oder durch das zweite Überbrückungselement 221 fließende Wechselstrom zu dem dritten Überbrückungselement 237. Diese Kommutierung erfolgt, weil das dritte Überbrückungselement 237 im geschlossenen Zustand einen sehr geringen ohmschen Widerstand aufweist. Das dritte Überbrückungselement ist vorzugsweise als ein mechanischer Überbrückungsschalter ausgestaltet. Mit dem dritten Überbrückungselement 237 kann der Wechselstrom 20 vergleichsweise lange geführt werden, ohne dass das erste Überbrückungselement 206 oder das zweite Überbrückungselement 221 übermäßig stark belastet wird.

Das zweite Überbrückungselement 221 / die Funkenstrecke 221 ist also ein schnelles Überbrückungselement und überbrückt die Kondensatoreinheit 26, wenn das erste Überbrückungselement 206 / der Leistungshalbleiterschalter 206 aufgrund eines Defekts nicht schließt.

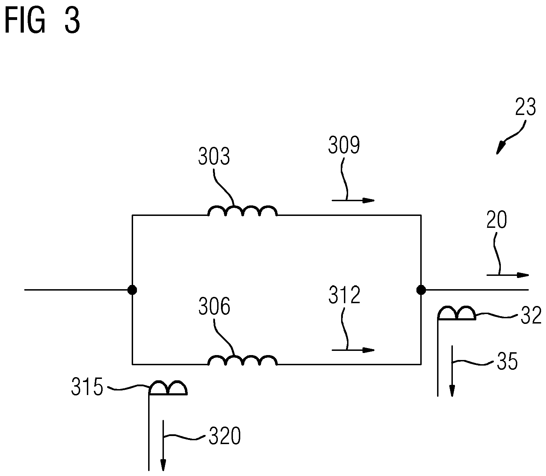

In Figur 3 ist dargestellt, dass die Spuleneinheit 23 vorzugsweise zwei elektrisch parallel geschaltete Spulen aufweisen kann: eine erste Spule 303 und eine elektrisch parallel geschaltete zweite Spule 306. Der durch die Spuleneinheit 28 fließende Wechselstrom 20 teilt sich auf in einen ersten Teilstrom 309, der durch die erste Spule 303 fließt und in einen zweiten Teilstrom 312, der durch die zweite Spule 306 fließt. Mittels des ersten Stromsensors 32 wird der Gesamt-Wechselstrom 20 gemessen, mittels eines dritten Stromsensors 315 wird der durch die zweite Spule 306 fließende zweite Teilstrom 312 gemessen. Durch Auswertung des von dem ersten Stromsensor 32 stammenden ersten Strommesssignals 35 und eines von dem dritten Stromsensor 315 stammenden dritten Strommesssignals 320 kann der erste Teilstrom 309 sowie der zweite Teilstrom 312 bestimmt werden.

Wenn die erste Spule 303 und die zweite Spule 306 jeweils eine gleich große elektrische Induktivität aufweisen, dann teilt sich der Wechselstrom 20 gleichmäßig auf die erste Spule 303 und die zweite Spule 306 auf: Der erste Teilstrom 309 ist dann genauso groß wie der zweite Teilstrom 312. Wenn nun beispielsweise an der ersten Spule 303 ein Defekt auftritt (beispielsweise ein Windungsschluss), dann verändert sich die elektrische Induktivität der ersten Spule 303. Im Falle eines Windungsschlusses verringert sich die elektrische Induktivität der ersten Spule 303. Dadurch wird der erste Teilstrom 309 größer. Die Steuereinheit 38 überwacht das Verhältnis des ersten Teilstroms 309 zu dem zweiten Teilstrom 312. Sobald sich dieses Verhältnis signifikant ändert (z. B. um mehr als einen dritten Schwellwert 268, vgl. Figur 2), dann erzeugt die Steuereinheit 38 ein Alarmsignal 270 (vgl. Figur 2). Dieses Alarmsignal 270 bedeutet, dass ein Defekt bei der Spuleneinheit 23 aufgetreten ist.

Beispielsweise kann das Alarmsignal 270 erzeugt werden, sobald der erste Teilstrom 309 um mehr als 5% größer ist als der zweite Teilstrom 312 (dritter Schwellwert 268 entspricht 5%). Alternativ kann auch ein Differenzstrom aus dem ersten Teilstrom und dem zweiten Teilstrom gebildet werden (Differenzstrom = erster Teilstrom 309 - zweiter Teilstrom 312) und das Alarmsignal 270 kann erzeugt werden, sobald der Differenzstrom einen Schwellwert überschreitet (dritter Schwellwert 268 entspricht diesem Schwellwert). Durch diese Spuleneinheit-Defekterkennung wird die Zuverlässigkeit der Strombegrenzungsschaltung nochmals deutlich erhöht.

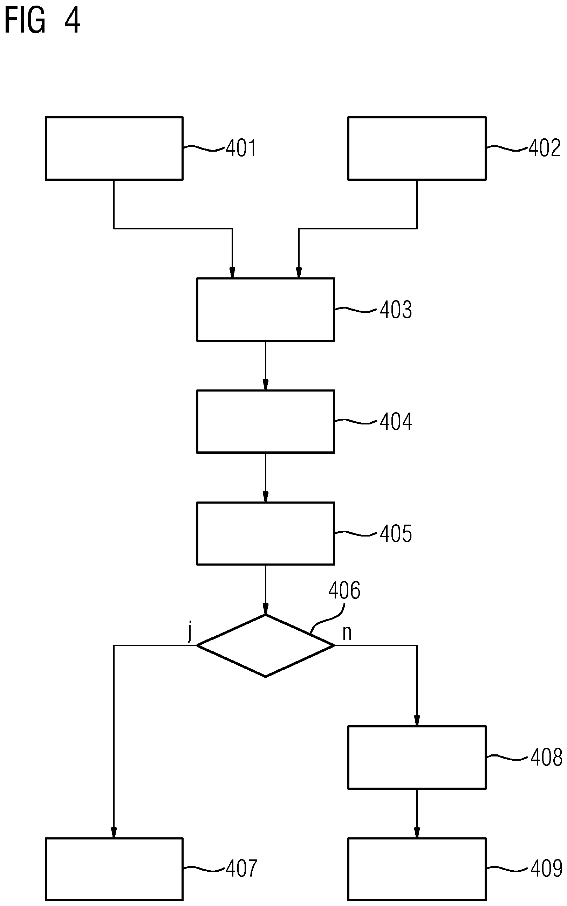

In Figur 4 ist mittels eines Ablaufdiagramms ein Ausführungsbeispiel eines Verfahrens zum Begrenzen der Größe eines Wechselstroms dargestellt. Dabei finden in den Blöcken 401 bis 409 die nachfolgend aufgeführten Verfahrensschritte statt.

Block 401:
Ermitteln, ob der durch die Spuleneinheit fließende elektrische Strom den ersten Schwellwert 39 überschreitet.

Block 402:
Ermitteln, ob der durch den Überspannungsbegrenzer fließende elektrische Strom den zweiten Schwellwert 263 überschreitet.

Block 403:
ODER-Verknüpfung der Ausgänge von Block 401 und Block 402

Block 404:
Erzeugung des ersten Überbrückungssignals 255, das dazu bestimmt ist, ein Schließen des ersten Überbrückungselements 206 (z. B. ein Schließen des Leistungshalbleiterschalters) zu veranlassen.

Block 405: Zeitverzögerte Erzeugung des zweiten Überbrückungssignals 258, das dazu bestimmt ist, ein Schließen des zweiten Überbrückungselements 221 (z. B. ein Zünden der Funkenstrecke) zu veranlassen.

Block 406:
Erkennen, ob das erste Überbrückungselement 206 schließt

Block 407 (wenn erstes Überbrückungselements schließt): Schließen des dritten Überbrückungselements 237 (z. B. mechanischer Schalter)

Block 408 (wenn erstes Überbrückungselements nicht schließt, zum Beispiel aufgrund eines Defekts):
Schließen des zweiten Überbrückungselements 221 (z. B. Funkenstrecke)

Block 409:
Schließen des dritten Überbrückungselements 237 (z. B. mechanischer Schalter)

Zu Block 404: Optional werden das erste Überbrückungssignal 255 und das dritte Überbrückungssignal 262 gleichzeitig erzeugt. Jedoch schließt das erste Überbrückungselement 206 schneller als das dritte Überbrückungselement 237, weil das erste Überbrückungselement 206 ein schnelleres Überbrückungselement als das dritte Überbrückungselement 237 ist. Beispielsweise ist das erste Überbrückungselement ein (relativ schneller) Leistungshalbleiter-Schalter ist, während das dritte Überbrückungselement ein (relativ langsamer) mechanischer Überbrückungsschalter ist. Dadurch kann der durch die Kondensatoreinheit 26 fließende Wechselstrom 20 relativ schnell in den ersten Überbrückungszweig 203 mit dem ersten Überbrückungselement 206 kommutieren und (nach dem Schließen des dritten Überbrückungselements 237) in den dritten Überbrückungszweig 233 mit dem dritten Überbrückungselement 237 kommutieren.

Zu Block 405: Optional werden das zweite Überbrückungssignal 258 und das dritte Überbrückungssignal 262 gleichzeitig erzeugt. Jedoch schließt das zweite Überbrückungselement 221 schneller als das dritte Überbrückungselement 237, weil das zweite Überbrückungselement 221 ein schnelleres Überbrückungselement als das dritte Überbrückungselement 237 ist. Beispielsweise ist das zweite Überbrückungselement 221 eine (relativ schnelle) Funkenstrecke, während das dritte Überbrückungselement ein (relativ langsamer) mechanischer Überbrückungsschalter ist. Dadurch kann der durch die Kondensatoreinheit 26 fließende Wechselstrom 20 bei einem Defekt des ersten Überbrückungszweigs 203 relativ schnell in den zweiten Überbrückungszweig 218 mit dem zweiten Überbrückungselement 221 kommutieren und (nach dem Schließen des dritten Überbrückungselements 237) in den dritten Überbrückungszweig 233 mit dem dritten Überbrückungselement 237 kommutieren.

Zwischen Block 404 und Block 405 findet eine Zeitverzögerung statt, so dass die bei dem Block 405 genannten Überbrückungssignale etwas später erzeugt werden als die bei dem Block 404 genannten Überbrückungssignale. Dadurch ist sichergestellt, dass auf das erste Überbrückungssignals 255 aus Block 404 hin zunächst das erste Überbrückungselement 206 im ersten Überbrückungszweig 203 schließt. Wenn das erste Überbrückungselement 206 geschlossen ist, dann fällt über dem zweitem Überbrückungselement 221 keine oder nur eine sehr geringe Spannung ab, so dass ein Schließen des zweiten Überbrückungselements 221 keine wesentliche Wirkung mehr hat oder (falls das zweite Überbrückungselement 221 als eine Funkenstrecke ausgestaltet ist) diese Funkenstrecke 221 überhaupt nicht mehr zündet. Das Schließen des zweiten Überbrückungselementes (auf das zweite Überbrückungssignal 258 hin) kommt also nur dann zur Wirkung, falls aufgrund eines Fehlers das erste Überbrückungselement (auf das erste Überbrückungssignal 255) hin nicht schließt.

Es wurde eine Strombegrenzungsschaltung und ein Verfahren zum Begrenzen der Größe eines Wechselstroms beschrieben, bei denen (bei geöffneter Überbrückungseinrichtung) im Idealfall eine Impedanz von Null (bzw. in der Realität eine sehr geringe Impedanz) vorliegt und deshalb im Normalfall der fließende Wechselstrom nicht behindert oder beeinflusst wird. Der Normalfall ist der Fall, zu dem kein Überstrom (insbesondere kein Kurzschlussstrom aufgrund eines Kurzschlusses) vorliegt. Erst wenn ein Überstrom auftritt, dann wird die Kondensatoreinheit 26 von der Überbrückungseinrichtung 29 überbrückt (kurzgeschlossen), wodurch die Spuleinheit 23 bezüglich des fließenden Wechselstroms wirksam wird und diesen Wechselstrom schnell begrenzt. In der Regel wird die Kondensatoreinheit 26 durch den ersten (schnellen) Überbrückungszweig 203 der Überbrückungseinrichtung 29 überbrückt, insbesondere wird die Kondensatoreinheit 26 durch den (schnellen) Leistungshalbleiter-Schalter 206, der in dem ersten Überbrückungszweig 203 angeordnet ist, überbrückt. Falls beim ersten Überbrückungszweig 203 ein Fehler auftritt (so dass die Überbrückung mittels des ersten Überbrückungszweigs 203 nicht stattfindet), dann wird die Kondensatoreinheit 26 mittels des zweiten Überbrückungszweigs 218, insbesondere mittels der Funkenstrecke 221, vorgenommen. Zum längerfristigen Führen des Wechselstroms ist darüber hinaus ein dritter Überbrückungszweig 233 mit einem dritten Überbrückungselement 237, insbesondere mit einem mechanischen Überbrückungsschalter 237, vorgesehen, welcher den Wechselstrom vergleichsweise lange und verlustarm führen kann.

Die Überbrückungseinrichtung funktioniert also auch bei Auftreten eines Defekts bei dem ersten Überbrückungszweig oder bei einer Störung der Signalübertragung zwischen der Steuereinheit 38 und dem ersten Überbrückungselement 206 zuverlässig, so dass eine robuste und zuverlässige Strombegrenzungsschaltung vorliegt.

Die Spuleneinheit 23 begrenzt den elektrischen Strom, insbesondere den elektrischen Kurzschlussstrom. Die Kondensatoreinheit 26 erzeugt (im nichtüberbrückten Zustand) im Normalfall/normalen Betriebsfall die Null-Impedanz der Reihenschaltung aus Spuleneinheit und Kondensatoreinheit. Der Überspannungsbegrenzer 245 schützt die Kondensatoreinheit vor Überspannung, insbesondere während des Auftretens eines Fehlers oder Kurzschlusses. Der Leistungshalbleiter-Schalter 206 gewährleistet eine schnelle Überbrückung der Kondensatoreinheit im Überstromfall und wird im Regelfall (d. h. wenn kein Defekt in der Strombegrenzungsschaltung vorliegt) zum Überbrücken der Kondensatoreinheit 26 verwendet. Die Schnell-Überbrückung der Kondensatoreinheit 26 findet also in der Regel mit dem Leistungshalbleiter-Schalter 206 statt, welcher antiparallele Thyristoren aufweist. Die erste Dämpfungsschaltung 209 / weitere Spuleneinheit 209 begrenzt den Strom durch den Leistungshalbleiter-Schalter 206 und die Größe der Stromänderung di/dt, die an dem Leistungshalbleiter-Schalter 206 auftritt.

Der Stromfluss durch den Leistungshalbleiterschalter wird also begrenzt mittels der elektrisch in Reihe zu dem Leistungshalbleiterschalter geschalteten ersten Dämpfungsschaltung 209 / weiteren Spuleneinheit 209. Das zweite Überbrückungselement 221, insbesondere die Funkenstrecke 221, ermöglicht eine alternative Überbrückung der Kondensatoreinheit in dem Fall, dass das erste Überbrückungselement 206/der erste Leistungshalbleiterschalter 206 ausfällt. Dadurch wird eine vollständige Redundanz erreicht. Die zweite Dämpfungsschaltung 225 begrenzt den Strom durch das zweite Überbrückungselement 221 / Funkenstrecke 221 und durch das dritte Überbrückungselement 237 / mechanische Überbrückungsschalter 237 und ermöglicht eine ausreichende Dämpfung des Entladestroms der Kondensatoreinheit 26. Das dritte Überbrückungselement 237 / der mechanische Überbrückungsschalters 237 schützt den Überspannungsbegrenzer 245, das erste Überbrückungselement 206 und das zweite Überbrückungselement 221. Das dritte Überbrückungselement 237 kann auch dann geschlossen werden, wenn eine Überbrückung der Kondensatoreinheit 26 aus anderen Gründen als Überstrom notwendig ist, also beispielsweise bei einem anderen Fehler in dem Energieversorgungsnetz. Der

Überbrückungstrenner 17, der erste Trennschalter 5 und der zweite Trennschalter 11 dienen dem Einfügen der Strombegrenzungsschaltung in das Energieversorgungsnetz (Energieübertragungsnetz) und zum Trennen der Strombegrenzungsschaltung aus dem Energieversorgungsnetz.

Aufgrund des durch die Spuleneinheit 23 fließenden Stroms und/oder des durch den Überspannungsbegrenzer 245 fließenden Stroms wird erkannt, wann ein Überstrom vorliegt und wann folglich die Überbrückungseinrichtung 29 geschlossen werden muss. Die Verwendung von zwei unabhängigen Strömen stellt sicher, dass die Strombegrenzungsschaltung 1 auch im Falle eines Kommunikationsfehlers oder eines Ausfalls eines Stromsensors zuverlässig funktioniert. Sobald einer der beiden Ströme einen jeweils zugehörigen Schwellwert überschreitet, wird das erste Überbrückungssignal erzeugt und dadurch die Überbrückung der Kondensatoreinheit angeregt/aktiviert. Dann läuft das im Zusammenhang mit Figur 4 beschriebene Verfahren ab.

Es wurde eine Strombegrenzungsschaltung und ein Verfahren zum Begrenzen der Größe eines Wechselstroms beschrieben, mit denen im Falle eines Überstroms schnell der Strom begrenzt werden kann. Im Normalfall (d. h. wenn kein Überstrom vorliegt), beeinflusst die Strombegrenzungsschaltung den fließenden Wechselstrom nicht oder kaum. Aufgrund des Vorhandenseins mehrerer Überbrückungszweige in der Überbrückungseinrichtung 29 wird eine hohe Zuverlässigkeit der Strombegrenzungsschaltung erreicht, insbesondere auch bei Auftreten von Bauelementen- oder Kommunikationsfehlern in einzelnen Abschnitten der Strombegrenzungsschaltung. Durch die Begrenzung des Stroms (insbesondere bei Auftreten von Kurzschlüssen) wird die dynamische und thermische Belastung für die Bauteile in dem Energieversorgungsnetz deutlich reduziert, so dass die Nutzungsdauer dieser Bauteile deutlich verlängert werden kann.

## Patentansprüche

1. Strombegrenzungsschaltung (1) zum Begrenzen der Größe eines Wechselstroms (20) mit

   - einer Spuleneinheit (23) und einer Kondensatoreinheit (26), die elektrisch in Reihe geschaltet sind, und
   - einer Überbrückungseinrichtung (29) zum elektrischen Überbrücken der Kondensatoreinheit (26) bei Auftreten eines Überstroms, wobei
   - die Überbrückungseinrichtung (29) einen ersten Überbrückungszweig (203) zum Überbrücken der Kondensatoreinheit (26) aufweist, wobei der erste Überbrückungszweig (203) ein erstes Überbrückungselement (206), insbesondere einen Leistungshalbleiterschalter (206), aufweist,
   - die Überbrückungseinrichtung (29) einen zweiten Überbrückungszweig (218) zum Überbrücken der Kondensatoreinheit (26) aufweist, wobei der zweite Überbrückungszweig (218) elektrisch parallel zu dem ersten Überbrückungszweig (203) geschaltet ist und der zweite Überbrückungszweig (218) ein zweites Überbrückungselement (221), insbesondere eine Funkenstrecke (221), aufweist,
   - eine Steuereinheit (38) so ausgestaltet ist, dass diese ein erstes Überbrückungssignal (255) erzeugt, wenn der durch die Spuleneinheit (23) fließende elektrische Strom einen ersten Schwellwert (39) überschreitet, wobei das erste Überbrückungssignal (255) dazu bestimmt ist, ein Schließen des ersten Überbrückungselements (206) zu veranlassen, und
   - die Steuereinheit (38) so ausgestaltet ist, dass diese ein zweites Überbrückungssignal (258) erzeugt, wobei das zweite Überbrückungssignal (258) dazu bestimmt ist, ein Schließen des zweiten Überbrückungselements (221) zu veranlassen, wenn auf das erste Überbrückungssignal (255) hin das erste Überbrückungselement (206) nicht schließt,

   **dadurch gekennzeichnet, dass**

   - die Überbrückungseinrichtung (29) einen dritten Überbrückungszweig (233) zum Überbrücken des zweiten Überbrückungselements (221) aufweist, wobei der dritte Überbrückungszweig (233) elektrisch parallel zu dem zweiten Überbrückungselement (221) geschaltet ist und der dritte Überbrückungszweig (233) als ein drittes Überbrückungselement (237) einen mechanischen Überbrückungsschalter (237) aufweist, und
   - die Steuereinheit (38) so ausgestaltet ist, dass diese gemeinsam mit dem ersten Überbrückungssignal (255) und gemeinsam mit dem zweiten Überbrückungssignal (258) oder geringfügig zeitverzögert nach dem ersten Überbrückungssignal (255) oder dem zweiten Überbrückungssignal (258) ein drittes Überbrückungssignal (262) an das dritte Überbrückungselement (237) sendet, worauf das dritte Überbrückungselement (237) schließt und daraufhin ein zuvor durch das erste Überbrückungselement (206) oder durch das zweite Überbrückungselement (221) fließender Wechselstrom zu dem dritten Überbrückungselement (237) kommutiert.

2. Strombegrenzungsschaltung nach Anspruch 1, **dadurch gekennzeichnet, dass** die Kondensatoreinheit (26) eine derartige Kapazität aufweist und die Spuleneinheit (23) eine derartige Induktivität aufweist, dass bei der Nennfrequenz des Wechselstroms (20) der Betrag des kapazitiven Blindwiderstands der Kondensatoreinheit (26) dem Betrag des induktiven Blindwiderstands der Spuleneinheit (23) entspricht.

3. Strombegrenzungsschaltung nach einem der vorhergehenden Ansprüche, **dadurch gekennzeichne**t, dass

   - die Kondensatoreinheit (26) mit einem Überspannungsbegrenzer (245), insbesondere mit einem Varistor (245), versehen ist.

4. Strombegrenzungsschaltung nach einem der vorhergehenden Ansprüche, **dadurch gekennzeichnet, dass**

   - die Spuleneinheit (23) zwei parallel geschaltete elektrische Spulen (303, 306) aufweist.

5. Strombegrenzungsschaltung nach einem der vorhergehenden Ansprüche, **dadurch gekennzeichnet, dass**

   - die Steuereinheit (38) so ausgestaltet ist, dass diese das erste Überbrückungssignal (255) auch dann erzeugt, wenn der durch den Überspannungsbegrenzer (245) fließende elektrische Strom einen zweiten Schwellwert (263) überschreitet.

6. Verfahren zum Begrenzen der Größe eines Wechselstroms, bei dem

   - der Wechselstrom (20) durch eine elektrische Reihenschaltung aus einer Spuleneinheit (23) und einer Kondensatoreinheit (26) geleitet wird, und
   - zum Begrenzen der Größe des Wechselstroms (20) die Kondensatoreinheit (23) elektrisch überbrückt (29) wird, wodurch der induktive Blindwiderstand der Reihenschaltung vergrößert wird,

- die Kondensatoreinheit (26) elektrisch überbrückt wird mittels eines ersten Überbrückungszweigs (203), der ein erstes Überbrückungselement (206), insbesondere einen Leistungshalbleiterschalter (206), aufweist,

- die Kondensatoreinheit (26) mittels eines zweiten Überbrückungszweigs (218) elektrisch überbrückt wird, wenn beim Überbrücken der Kondensatoreinheit (26) mittels des ersten Überbrückungszweigs (203) ein Fehler auftritt, wobei der zweite Überbrückungszweig (218) ein zweites Überbrückungselement (221), insbesondere eine Funkenstrecke (221), aufweist,

- zusätzlich zum Überbrücken der Kondensatoreinheit (26) mittels des ersten Überbrückungszweigs (203) oder mittels des zweiten Überbrückungszweigs (218) das zweite Überbrückungselement (221) elektrisch überbrückt wird mittels eines dritten Überbrückungszweigs (233), der elektrisch parallel zu dem zweiten Überbrückungselement (221) geschaltet ist und als ein drittes Überbrückungselement (237) einen mechanischen Überbrückungsschalter (237) aufweist, wobei

- von einer Steuereinheit (38) ein erstes Überbrückungssignal (255) erzeugt wird, wenn der durch die Spuleneinheit (23) fließende elektrische Strom einen ersten Schwellwert (39) überschreitet, wobei das erste Überbrückungssignal (255) dazu bestimmt ist, ein Schließen des ersten Überbrückungselements (206) zu veranlassen,

- von der Steuereinheit (38) ein zweites Überbrückungssignal (258) erzeugt wird, wobei das zweite Überbrückungssignal (258) dazu bestimmt ist, ein Schließen des zweiten Überbrückungselements (221) zu veranlassen, wenn auf das erste Überbrückungssignal (255) hin das erste Überbrückungselement (206) nicht schließt, und

- von der Steuereinheit (38) gemeinsam mit dem ersten Überbrückungssignal (255) und gemeinsam mit dem zweiten Überbrückungssignal (258) oder geringfügig zeitverzögert nach dem ersten Überbrückungssignal (255) oder dem zweiten Überbrückungssignal (258) ein drittes Überbrückungssignal (262) an das dritte Überbrückungselement (237) gesendet wird, worauf das dritte Überbrückungselement (237) schließt und daraufhin ein zuvor durch das erste Überbrückungselement (206) oder durch das zweite Überbrückungselement (221) fließender Wechselstrom zu dem dritten Überbrückungselement (237) kommutiert.

7. Verfahren nach Anspruch 6,
**dadurch gekennzeichnet, dass**

- die Spuleneinheit (23) zwei parallel geschaltete elektrische Spulen (303, 306) aufweist,
- der durch die Spulen (303, 306) fließende Strom überwacht wird, und
- ein Alarmsignal (270) erzeugt wird, sobald sich das Verhältnis der durch die beiden Spulen (303, 306) fließenden Ströme um mehr als einen Schwellwert (268) verändert.

## Claims

1. Current-limiting circuit (1) for limiting the magnitude of an alternating current (20) comprising

- a coil unit (23) and a capacitor unit (26), which are connected electrically in series, and
- a bypass device (29) for electrically bypassing the capacitor unit (26) in the event of the occurrence of an excess current, wherein
- the bypass device (29) has a first bypass branch (203) for bypassing the capacitor unit (26), wherein the first bypass branch (203) has a first bypass element (206), in particular a power semiconductor switch (206),
- the bypass device (29) has a second bypass branch (218) for bypassing the capacitor unit (26), wherein the second bypass branch (218) is connected electrically in parallel with the first bypass branch (203), and the second bypass branch (218) has a second bypass element (221), in particular a spark gap (221),
- a control unit (38) is configured in such a way that said control unit generates a first bypass signal (255) when the electrical current flowing through the coil unit (23) exceeds a first threshold value (39), wherein the first bypass signal (255) is intended to cause the first bypass element (206) to close, and
- the control unit (38) is configured in such a way that said control unit generates a second bypass signal (258), wherein the second bypass signal (258) is intended to cause the second bypass element (221) to close when the first bypass element (206) does not close in response to the first bypass signal (255),

**characterized in that**

- the bypass device (29) has a third bypass branch (233) for bypassing the second bypass element (221), wherein the third bypass branch (233) is connected electrically in parallel with the second bypass element (221), and the third bypass branch (233) has a mechanical bypass switch (237) as third bypass element (237), and
- the control unit (38) is configured in such a way that said control unit transmits a third bypass signal (262) to the third bypass element (237) together with the first bypass signal (255) and together with the second bypass signal (258) or with a slight time delay after the first bypass signal (255) or the second bypass signal (258), after which the third bypass element (237) closes and thereupon an alternating current previously flowing through the first bypass element (206) or through the second bypass element (221) switches to the third bypass element (237).

2. Current-limiting circuit according to Claim 1, **characterized in that** the capacitor unit (26) has such a capacitance and the coil unit (23) has such an inductance that, at the rated frequency of the alternating current (20), the absolute value of the capacitive reactance of the capacitor unit (26) corresponds to the absolute value of the inductive reactance of the coil unit (23) .

3. Current-limiting circuit according to one of the preceding claims, **characterized in that**

   - the capacitor unit (26) is provided with a surge limiter (245), in particular with a varistor (245).

4. Current-limiting circuit according to one of the preceding claims, **characterized in that**

   - the coil unit (23) has two electrical coils (303, 306) connected in parallel.

5. Current-limiting circuit according to one of the preceding claims, **characterized in that**

   - the control unit (38) is configured in such a way that said control unit generates the first bypass signal (255) even when the electrical current flowing through the surge limiter (245) exceeds a second threshold value (263).

6. Method for limiting the magnitude of an alternating current, in which

   - the alternating current (20) is conducted through an electrical series circuit comprising a coil unit (23) and a capacitor unit (26), and
   - in order to limit the magnitude of the alternating current (20), the capacitor unit (23) is electrically bypassed (29), as a result of which the inductive reactance of the series circuit is increased,
   - the capacitor unit (26) is electrically bypassed by means of a first bypass branch (203), which has a first bypass element (206), in particular a power semiconductor switch (206),

- the capacitor unit (26) is electrically bypassed by means of a second bypass branch (218) when a fault occurs during bypassing of the capacitor unit (26) by means of the first bypass branch (203), wherein the second bypass branch (218) has a second bypass element (221), in particular a spark gap (221),
- in addition to the bypassing of the capacitor unit (26) by means of the first bypass branch (203) or by means of the second bypass branch (218), the second bypass element (221) is electrically bypassed by means of a third bypass branch (233), which is connected electrically in parallel with the second bypass element (221) and has a mechanical bypass switch (237) as third bypass element (237), wherein
- a first bypass signal (255) is generated by a control unit (38) when the electrical current flowing through the coil unit (23) exceeds a first threshold value (39), wherein the first bypass signal (255) is intended to cause the first bypass element (206) to close,
- a second bypass signal (258) is generated by the control unit (38), wherein the second bypass signal (258) is intended to cause the second bypass element (221) to close when the first bypass element (206) does not close in response to the first bypass signal (255), and
- a third bypass signal (262) is transmitted by the control unit (38) to the third bypass element (237) together with the first bypass signal (255) and together with the second bypass signal (258) or with a slight time delay after the first bypass signal (255) or the second bypass signal (258), after which the third bypass element (237) closes and thereupon an alternating current previously flowing through the first bypass element (206) or through the second bypass element (221) switches to the third bypass element (237).

7. Method according to Claim 6,
   **characterized in that**

   - the coil unit (23) has two electrical coils (303, 306) connected in parallel,
   - the current flowing through the coils (303, 306) is monitored, and
   - an alarm signal (270) is generated as soon as the ratio of the currents flowing through the two coils (303, 306) changes by more than a threshold value (268).

**Revendications**

1. Circuit (1) de limitation de courant pour limiter l'intensité d'un courant (20) alternatif comprenant

- une unité (23) de bobine et une unité (26) de condensateur, qui sont montées électriquement en série, et

- un dispositif (29) de shuntage pour le shuntage électrique de l'unité (26) de condensateur à l'apparition d'une surintensité, dans lequel

- le dispositif (29) de shuntage a une première branche (203) de shuntage pour shunter l'unité (26) de condensateur, la première branche (203) de shuntage ayant un premier élément (206) de shuntage, notamment un interrupteur (206) à semiconducteur de puissance,

- le dispositif (29) de shuntage a une deuxième branche (218) de shuntage pour shunter l'unité (26) de condensateur, la deuxième branche (218) de shuntage étant montée en parallèle électriquement avec la première branche (203) de shuntage, et la deuxième branche (218) de shuntage ayant un deuxième élément (221) de shuntage, notamment un éclateur (221),

- une unité (38) de commande conformée de manière à produire un premier signal (255) de shuntage, si le courant électrique passant dans l'unité (23) de bobine dépasse une première valeur (39) de seuil, le premier signal (255) de shuntage étant destiné à provoquer une fermeture du premier élément (206) de shuntage, et

- l'unité (38) de commande est conformée de manière à produire un deuxième signal (258) de shuntage, le deuxième signal (258) de shuntage étant destiné à provoquer une fermeture du deuxième élément (221) de shuntage, si, sur le premier signal (255) de shuntage, le premier élément (206) de shuntage ne se ferme pas, **caractérisé en ce que**

- le dispositif (29) de shuntage a une troisième branche (233) de shuntage pour shunter le deuxième élément (221) de shuntage, la troisième branche (233) de shuntage étant montée en parallèle électriquement avec le deuxième élément (221) de shuntage et la troisième branche (233) de shuntage ayant comme troisième élément (237) de shuntage un interrupteur (237) mécanique de shuntage, et

- l'unité (38) de commande est conformée de manière à envoyer, conjointement avec le premier signal (255) de shuntage et conjointement avec le deuxième signal (258) de shuntage ou, d'une manière légèrement retardée dans le temps après le premier signal (255) de shuntage ou le deuxième signal (258) de shuntage, un troisième signal (262) de shuntage au troisième élément (237) de shuntage, sur quoi le troisième élément (237) de shuntage se ferme et ensuite commute un courant alternatif, passant auparavant dans le premier élément (206) de shuntage ou dans le deuxième élément (221) de shuntage, sur le troisième élément (237) de shuntage.

2. Circuit de limitation de courant suivant la revendication 1,
   **caractérisé en ce que**
   l'unité (26) de condensateur a une capacité telle et l'unité (23) de bobine a une inductance telle que, à la fréquence nominale du courant (20) alternatif, la valeur de la résistance réactive capacitive de l'unité (26) de condensateur correspond à la valeur de la résistance réactive inductive de l'unité (23) de bobine.

3. Circuit de limitation de courant suivant l'une des revendications précédentes,
   **caractérisé en ce que**

   - l'unité (26) de condensateur est pourvue d'un limiteur (245) de surtension, notamment d'une varistance (245).

4. Circuit de limitation de courant suivant l'une des revendications précédentes,
   **caractérisé en ce que**

   - l'unité (23) de bobine a deux bobines (303, 306) électriques montées en parallèle.

5. Circuit de limitation de courant suivant l'une des revendications précédentes,
   **caractérisé en ce que**

   - l'unité (38) de commande est conformée de manière à produire le premier signal (255) de shuntage, même lorsque le courant électrique passant dans le limiteur (245) de surtension dépasse une deuxième valeur (263) de seuil.

6. Procédé de limitation de l'intensité d'un courant alternatif, dans lequel

   - on fait passer le courant (20) alternatif dans un circuit série électrique, composé d'une unité (23) de bobine et d'une unité (26) de condensateur et

   - pour limiter l'intensité du courant (20) alternatif, on shunte (29) électriquement l'unité (23) de condensateur, grâce à quoi on augmente la résistance réactive inductive du circuit série,

   - on shunte électriquement l'unité (26) de condensateur au moyen d'une première branche (203) de shuntage, qui a un premier élément (206) de shuntage, notamment un interrupteur (206) à semiconducteur de puissance,

   - on shunte électriquement l'unité (26) de condensateur au moyen d'un deuxième branche (218) de shuntage, s'il est apparu un défaut au shuntage de l'unité (26) de condensateur au moyen de la première branche (203) de shuntage, la deuxième branche (218) de shuntage ayant un deuxième élément (221) de shuntage, notamment un éclateur (221),
- en plus du shuntage de l'unité (26) de condensateur au moyen de la première branche (203) de shuntage ou au moyen de la deuxième branche (218) de shuntage, on shunte électriquement le deuxième élément (221) de shuntage au moyen d'une troisième branche (233) de shuntage, qui est montée électriquement en parallèle avec le deuxième élément (221) de shuntage et qui a, comme troisième élément (237) de shuntage, un interrupteur (237) mécanique de shuntage, dans lequel
- par une unité (38) de commande, on produit un premier signal (255) de shuntage, si le courant électrique passant dans l'unité (23) de bobine dépasse une première valeur (39) de seuil, le premier signal (255) de shuntage étant destiné à provoquer une fermeture du premier élément (206) de shuntage,
- par l'unité (38) de commande, on produit un deuxième signal (258) de shuntage, le deuxième signal (258) de shuntage étant destiné à provoquer une fermeture du deuxième élément (221) de shuntage, si sur le premier signal (255) de shuntage, le premier élément (206) de shuntage ne se ferme pas, et
- par l'unité (38) de commande, on envoie, conjointement avec le premier signal (255) de shuntage et conjointement avec le deuxième signal (258) de shuntage ou, d'une manière légèrement retardée dans le temps après le premier signal (255) de shuntage ou le deuxième signal (258) de shuntage, un troisième signal (262) de shuntage au troisième élément (237) de shuntage, après quoi le troisième élément (237) de shuntage se ferme et ensuite un courant alternatif, passant auparavant dans le premier élément (206) de shuntage ou dans le deuxième élément (221) de shuntage, est commuté sur le troisième élément (237) de shuntage.

7. Procédé suivant la revendication 6, **caractérisé en ce que**

   - l'unité (23) de bobine a deux bobines (303, 306) électriques montées en parallèle,
   - on contrôle le courant passant dans les bobines (303, 306), et
   - on produit un signal (270) d'alerte, dès que le rapport des courants passant dans les deux bobines (303, 306) varie de plus d'une valeur (268) de seuil.

FIG 1

# FIG 2

FIG 3

# FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006010725 A1
- WO 2016120880 A1
- EP 2983262 A1

**In der Beschreibung aufgeführte Nicht-Patentliteratur**

- Principle and Characteristics of a Fault Current Limiter with Series Compensation. **S. SUGIMOTO et al.** IEEE Transactions on power delivery. IEEE Service center, 01. April 1996, vol. 11, 842-847